# EUROPEAN PATENT SPECIFICATION

(11) **EP 1 303 849 B1**
(45) Date of publication and mention of the grant of the patent: **14.09.2005**
(21) Application number: 01949744.5
(22) Date of filing: 19.07.2001
(51) Int. Cl.: G09G 1/00, G06T 1/20

(54) **METHOD AND APPARATUS FOR GRAPHICS CONTEXT SWITCHING**
VERFAHREN UND GERÄT ZUR GRAPHISCHEN KONTEXTUMSCHALTUNG
PROCEDE ET APPAREIL DE CHANGEMENT DE CONTEXTE GRAPHIQUE DYNAMIQUE UTILISES DANS UN SYSTEME INFORMATIQUE

(30) Priority: 20.07.2000 US 620355
(43) Date of publication of application: 23.04.2003
(73) Proprietor: International Business Machines Corporation, Armonk, NY 10504 (US)
(72) Inventor: DESCHENEAUX, Roger, Paul, Austin, TX 78717 (US); KUO, Wei, Austin, TX 78746 (US)
(74) Representative: Waldner, Philip
(86) International application number: PCT/GB2001/003226
(87) International publication number: WO 2002/009083

(56) References cited:
- EP-A- 0 475 422
- WO-A-99/56249
- JP-A- 2001 084 154
- US-B1- 6 317 137

## Description

### 1. Technical Field:

The present invention relates generally to an improved data processing system and in particular, a method and apparatus for processing graphics data.

### 2. Description of Related Art:

Data processing systems, such as personal computers and work stations, are commonly utilized to run computer-aided design (CAD) applications, computer-aided manufacturing (CAM) applications, and computer-aided software engineering (CASE) tools. Engineers, scientists, technicians, and others employ these applications daily. These applications involve complex calculations, such as finite element analysis, to model stress in structures. Other applications include chemical or molecular modeling applications. CAD/CAM/CASE applications are normally graphics intensive in terms of the information relayed to the user. Data processing system users may employ other graphics intensive applications, such as desktop publishing applications. Generally, users of these applications require and demand that the data processing systems be able to provide extremely fast graphics information.

The processing of a graphics data stream to provide a graphical display on a video display terminal requires an extremely fast graphics system to provide a display with a rapid response. In these types of graphics systems, primitives are received for processing and display. A primitive is a graphics element that is used as a building block for creating images, such as, for example, a point, a line, an arc, a cone, or a sphere. A primitive is defined by a group of one or more vertices. An attribute is used to define how a primitive will be displayed. Attributes include, for example, line style, color, and surface texture. A vertex defines a point, an end point of an edge, or a corner of a polygon where two edges meet. Data also is associated with a vertex in which the data includes information, such as positional coordinates, colors, normals, and texture coordinates. Commands are sent to the graphics system to define how the primitives and other data should be processed for display.

With the large amounts of data and computations involved in processing graphics data, especially with three-dimensional applications, many of these computations have been offloaded from the central processing units to a graphics adapter. Within these graphics systems, a graphics pipeline located in the graphics adapter is used to process this graphics data. With a pipeline, the graphics data processing is partitioned into stages of processing elements in.which processing data may be executed sequentially by separate processing elements.

In a multi-tasking graphics environment, multiple processes often share the same graphics adapter. In order for each graphics process to send graphics data to the graphics adapter, each process requires a rendering context. This rendering context is restored on the graphics adapter by a context switch handler prior to the graphics data being sent to the graphics adapter from a particular graphics process for display. The context switch handler performs context save and restore functions for the graphics processes so that each graphics process is able to access the graphics adapter. The context for different graphics processes may differ by large amounts. For example, a three dimensional graphics environment is fairly large in comparison to a two dimensional graphics environment. Currently, the context size is set to be the same for all graphics processes. Switching the entire context for each process slows the process for displaying graphics data. Additionally, this mechanism wastes memory in the adapter as well as slowing the switching of context for different processes.

It is known from the document WP-A-99/562 49 to avoid context Switching of texture graphics data by rendering together the segments that reference the same texture data.

### SUMMARY OF THE INVENTION

The invention is set out in appended method claims 1 and 8, system claims 13 and 19, and computer program claims 15 and 16.

The present invention provides a method and apparatus in a data processing system for context management for a plurality of graphic processes. A request is received to send graphics data to a graphics adapter from a first graphics process within the plurality of graphics processes. A determination is made as to whether a complete change in a current context is required for the graphics adapter to process the graphics data from the first graphics process. If only a portion of the current context needs to be changed, the portions to be changed are saved. Then, the context information for the graphics process are retrieved and placed in with the current context information required using a set of contexts stored in a memory.

In a first aspect, the invention provides a method in a data processing system for handling data from a plurality of graphics processes: responsive to receiving a request from a graphics process to send graphics data to a graphics adapter, determining whether a complete change in a current context in the graphics adapter is required to process the graphics data for the graphics process from the plurality of graphics processes; and changing a portion of the current context using an associated context in the graphics adapter from a set of contexts stored in a memory in an absence if a requirement for a complete change in the current context, wherein the associated context is associated with the graphics process..

In a second aspect, the invention provides a method in a data processing system for context management for a plurality of graphic processes, the method comprising: receiving a request to send graphics data to a graphics adapter from a first graphics process within the plurality of graphics processes; determining whether a change of less than all of a current context is required for the graphics adapter to process the graphics data from the first graphics process to form an identified amount; and changing the identified amount of the current context to a another context using a set of contexts stored in a memory, wherein less than all of the current.context is changed.

In a third aspect, the invention provides a data processing system for handling data from a plurality of graphics processes: determining means, responsive to receiving a request from a graphics process to send graphics data to a graphics adapter, for determining whether a complete change in a current context in the graphics adapter is required to process the graphics data for the graphics process from the plurality of graphics processes; and changing means for changing a portion of the current context using an associated context in the graphics adapter from a set of contexts stored in a memory in an absence if a requirement for a complete change in the current context, wherein the associated context is associated with the graphics process.

In a fourth aspect, the invention provides a data processing system for context management for a plurality of graphic processes, the data processing system comprising: receiving means for receiving a request to send graphics data to a graphics adapter from a first graphics process within the plurality of graphics processes; determining means for determining whether a change of less than all of a current context is required for the graphics adapter to process the graphics data from the first graphics process to form an identified amount; and changing means for changing the identified amount of the current context to a another context using a set of contexts stored in a memory, wherein less than all of the current context is changed.

In a fifth aspect, the invention provides a computer program product in a computer readable medium for use in a data processing system for handling data from a plurality of graphics processes: first instructions, responsive to receiving a request from a graphics process to send graphics data to a graphics adapter, for determining whether a complete change in a current context in the graphics adapter is required to process the graphics data for the graphics process from the plurality of graphics processes; and second instructions for changing a portion of the current context using an associated context in the graphics adapter from a set of contexts stored in a memory in an absence if a requirement for a complete change in the current context, wherein the associated context is associated with the graphics process.

In a sixth aspect, the invention provides a computer program product in a computer readable medium for use in a data processing system for context management for a plurality of graphic processes, the computer program product comprising: first instructions for receiving a request to send graphics data to a graphics adapter from a first graphics process within the plurality of graphics processes; second instructions for determining whether a change of less than all of a current context is required for the graphics adapter to process the graphics data from the first graphics process to form an identified amount; and third instructions for changing the identified amount of the current context to a another context using a set of contexts stored in a memory, wherein less than all of the current context is changed.

A computer program according to the invention may be made available as a program product comprising program code recorded on a machine readable recording medium

### BRIEF DESCRIPTION OF THE DRAWINGS

Preferred embodiments of the invention will now be described in more detail, by way of example, with reference to the accompanying drawings in which:
**Figure 1** is a pictorial representation of a data processing system in which the present invention may be implemented in accordance with a preferred embodiment of the present invention;
**Figure 2** is a block diagram of a data processing system in which the present invention may be implemented;
**Figure 3** is a block diagram illustrating components used in dynamic context switching in accordance with a preferred embodiment of the present invention;
**Figure 4** is a diagram illustrating a com_record in accordance with a preferred embodiment of the present invention;
**Figure 5** is a flowchart for establishing a context in accordance with a preferred embodiment of the present invention;
**Figure 6** is a flowchart of a process for context switching in accordance with a preferred embodiment of the present invention;
**Figure 7** is a flowchart for saving context information in accordance with a preferred embodiment of the present invention; and
**Figure 8** is a flowchart for restoring context for a process in accordance with a preferred embodiment of the present invention.

### DETAILED DESCRIPTION OF THE PREFERRED EMBODIMENT

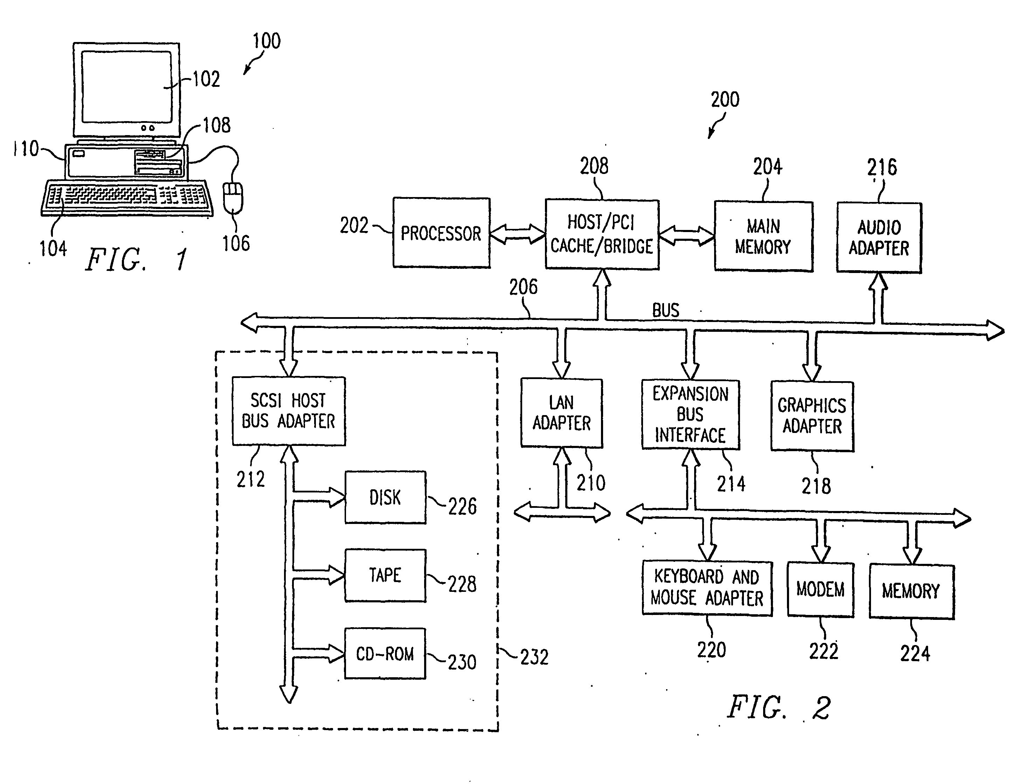

With reference now to the figures and in particular with reference to **Figure 1,** a pictorial representation of a data processing system in which the present invention may be implemented is depicted in accordance with a preferred embodiment of the present invention. A computer **100** is depicted which includes a system unit **110,** a video display terminal **102,** a keyboard **104,** storage devices 108, which may include floppy drives and other types of permanent and removable storage media, and mouse **106.** Additional input devices may be included with personal computer **100,** such as, for example, a joystick, touchpad, touch screen, trackball, microphone, and the like. Computer **100** can be implemented using any suitable computer, such as an IBM RS/6000 computer or IntelliStation computer, which are products of International Business Machines Corporation, located in Armonk, New York. Although the depicted representation shows a computer, other embodiments of the present invention may be implemented in other types of data processing systems, such as a network computer. Computer **100** also preferably includes a graphical user interface that may be implemented by means of systems software residing in computer readable media in operation within computer 100.

With reference now to **Figure 2,** a block diagram of a data processing system is shown in which the present invention may be implemented. Data processing system **200** is an example of a computer, such as computer **100** in **Figure 1,** in which code or instructions implementing the processes of the present invention may be located. Data processing system **200** employs a peripheral component interconnect (PCI) local bus architecture. Although the depicted example employs a PCI bus, other bus architectures such as Accelerated Graphics Port (AGP) and Industry Standard Architecture (ISA) may be used. Processor **202** and main memory **204** are connected to PCI local bus **206** through PCI bridge **208.** PCI bridge **208** also may include an integrated memory controller and cache memory for processor **202.** Additional connections to PCI local bus **206** may be made through direct component interconnection or through add-in boards. In the depicted example, local area network (LAN) adapter **210,** small computer system interface SCSI host bus adapter **212,** and expansion bus interface **214** are connected to PCI local bus 206 by direct component connection. In contrast, audio adapter **216,** and graphics adapter **218** are connected to PCI local bus **206** by add-in boards inserted into expansion slots. Expansion bus interface **214** provides a connection for a keyboard and mouse adapter **220,** modem **222,** and additional memory **224.** SCSI host bus adapter **212** provides a connection for hard disk drive **226,** tape drive **228,** and CD-ROM drive **230.** Typical PCI local bus implementations will support three or four PCI expansion slots or add-in connectors.

An operating system runs on processor **202** and is used to coordinate and provide control of various components within data processing system 200 in Figure 2. The operating system may be a commercially available operating system such as Windows 2000, which is available from Microsoft Corporation. An object oriented programming system such as Java may run in conjunction with the operating system and provides calls to the operating system from Java programs or applications executing on data processing system **200.** "Java" is a trademark of Sun Microsystems, Inc. Instructions for the operating system, the object-oriented operating system, and applications or programs are located on storage devices, such as hard disk drive **226,** and may be loaded into main memory **204** for execution by processor **202.** In particular, the present invention provides a mechanism for dynamically switching contexts for different processes sending graphics data to a graphics adapter, such as graphics adapter **218.** This advantage is provided through the use of an allocation of memory to store context for different processes sharing graphics adapter **218.**

Those of ordinary skill in the art will appreciate that the hardware in Figure 2 may vary depending on the implementation. Other internal hardware or peripheral devices, such as flash ROM (or equivalent nonvolatile memory) or optical disk drives and the like, may be used in addition to or in place of the hardware depicted in Figure 2. Also, the processes of the present invention may be applied to a multiprocessor data processing system.

For example, data processing system **200,** if optionally configured as a network computer, may not include SCSI host bus adapter **212,** hard disk drive **226,** tape drive **228,** and CD-ROM **230,** as noted by dotted line **232** in **Figure 2** denoting optional inclusion. In that case, the computer, to be properly called a client computer, must include some type of network communication interface, such as LAN adapter **210,** modem **222,** or the like. As another example, data processing system **200** may be a stand-alone system configured to be bootable without relying on some type of network communication interface, whether or not data processing system **200** comprises some type of network communication interface. As a further example, data processing system **200** may be a Personal Digital Assistant (PDA) device which is configured with ROM and/or flash ROM in order to provide non-volatile memory for storing operating system files and/or user-generated data.

The depicted example in **Figure 2** and above-described examples are not meant to imply architectural limitations. For example, data processing system **200** also may be a notebook, computer or hand held computer in addition to taking the form of a PDA. Data processing system **200** also may be a kiosk or a Web appliance.

The processes of the present invention are performed by processor **202** using computer implemented instructions, which may be located in a memory such as, for example, main memory **204,** memory **224,** or in one or more peripheral devices **226-230.**

The present invention provides a mechanism in a multi-tasking graphics environment in which multiple graphics processes share the same graphics adapter. A portion of the memory in the data processing system, such as, for example, main memory **204** in **Figure 2,** is allocated for use in context switching. In these examples, the memory allocation is in the form of a pinned buffer. A pinned buffer is a buffer that will not be swapped out to a disk, such as with a virtual memory computer system in which disk space is used as an extended memory for information that has not been recently used. Using a pinned buffer or other pinned memory allows the device driver to quickly access the information in the memory without having to have that information swapped in from a disk drive.

Graphics processes are able to access this pinned buffer to specify whether certain predefined functions or actions are needed. These functions include, for example, texture mapping and color lookups. Other functions include, for example, information about depth buffer testing; hardware lighting; bump-mapping, which is a variation of texture mapping; and anti-aliasing operations.

When a context switch occurs, the context switch mechanism reads the pinned buffer to decide whether a full context switch is required or whether a partial context switch is required. Context is information or parameters specified at one point in time. This information may not be restated or respecified at the time of a command to perform an operation, but necessarily influences the performance of the command. For example, one program may be used to draw a set of lines using the color green in which the color is a context. A second program may be used to draw a second set of lines using the color red. When the first program runs, the color is set to green. An interrupt occurs, prior to program one finishing drawing lines, in which program two begins to run. Program two sets the color to red and begins to draw lines. A second interrupt occurs in which it is now time for program one to resume execution. At this time, the color is set to red. Program one does not reset the color each time it draws a line. As a result, if the context, which in this case is the color of the lines, is not reset to green for program one, the lines will be drawn in the wrong color. A device driver is used to restore the context to green in this example. In this manner, the programs are not required to tract the context information.

This information also may be used to decided the size of the graphics context needed for use in allocating memory in the graphics adapter. Other information that is considered context include, for example, whether lighting or clipping is enabled; whether primitives should be drawn or filled; the current line stipple pattern; and current texture blending functions.

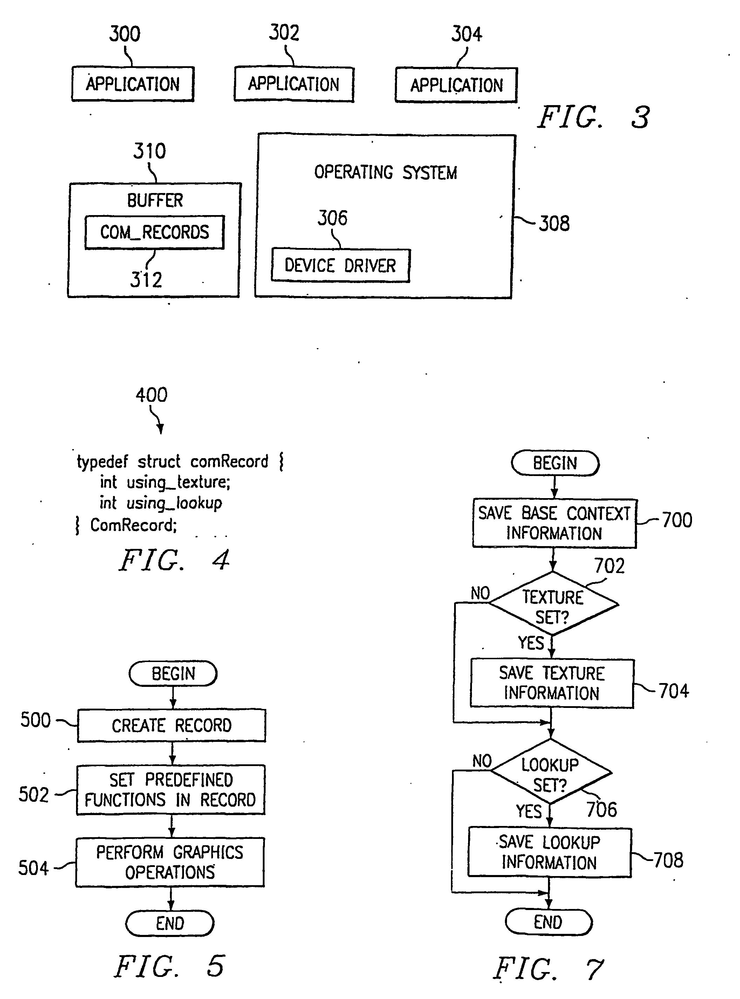

Turning next to **Figure 3,** a block diagram illustrating components used in dynamic context switching in accordance with a preferred embodiment of the present invention. In this example, applications 300, **302,** and **304** are in a multi-tasking graphics environment and share a single graphics adapter, such as graphics adapter **218** in **Figure** 2. As depicted, each application includes a graphics process, which generates graphics data for display. Of course, depending on the particular application, an application may contain multiple graphics processes. These applications send graphics data to device driver **306** in operating system **308.** A device driver is a program or routine that links a peripheral device, such as graphics adapter **218,** to an operating system. A particular device driver receives requests and data, such as requests and data from applications **300, 302,** and **304,** and translate those requests into the particular command language and format recognized by the peripheral device.

In this example, applications **300, 302,** and **304** are able to access buffer **310** to write and change context information. The context information takes the form of com_records **312** in this example. When one of these applications send graphics data to device driver **306** for display on a graphics adapter, device driver **306** will look at com_records **312** in buffer **310** to see whether a context switch is required. If a context switch is required, device driver **306** may also determine whether a partial or full context switch is needed. Based on this determination, device driver **306** will selectively switch the context in the graphics adapter. As part of switching the context, device driver **306** also may change the size of the graphics context to dynamically change the allocation of memory within the graphics adapter for the context. In this manner, when less memory is required for a particular context, more memory is made available in the graphics adapter for other uses. A device driver is present for each piece of hardware; such as a graphics adapter. The device driver is aware of potential context information and typically saves all context information. The amount of memory required for a particular context may be obtained from a device driver or from the information saved by the device driver for the graphics adapter.

A flag is set in these examples to identify the pieces or portions of the context being actively used. The device driver uses that flag to identify context that should be saved and context that should not be saved.

With reference now to **Figure 4,** a diagram illustrating a com_record is depicted in accordance with a preferred embodiment of the present invention. Com_record **400** is used to identify what context information is being used for a particular process. By using com_record **400,** the mechanism of the present invention is able to determine whether a full context switch is required when a new process is sending graphics data for processing.

Com_record **400** in this example includes an identification that texture and lookup functions are set for the process associated with com_record **400.** In these examples, each process is associated with a com_record. Com_record **400** is an example of a few lines of context information. These lines are indicators or flags to identify context that is currently being used by a particular process. A context typically includes hundreds of elements to identify the context. In creating a context, a process creates the context when it is initiated. A graphics process makes an API call to create one or more graphics context. When a particular context is to be active, the graphics process makes an API call to associate a particular context with a window. In this manner, a relationship exists between the graphics process, the context, and the window. The context is identified through a unique identifier supplied by the device driver. This unique identifier is provided to the application through the API call used to create the context. These unique identifiers are stored in com_record **400**. In this manner, the device driver has a unique pairing between the unique identifier for each context and the information supplied by the API about portions of the context being actively used.

The API creates a com_record 400 in shared memory and tells the device driver where com_record 400 is located in shared memory via a call to the device driver exactly one time. After that, the device driver looks at shared memory to make its decisions about the context switching. If this information changes, the application updates the shared memory. For example, an application begins, and an application initializes shared memory to say: using_texture is FALSE and using_lookup is FALSE. Next, the application calls the device driver to tell it where the shared memory is and that the shared memory is ready to use. Then, the device driver makes a context switch. When the device driver saves the context, it sees that using_texture was FALSE, so the device driver does not save texture information. The device driver sees that using_lookup is false, so the device driver does not save lookup information. When the device driver switches this process back into active mode, the device driver sees that using_texture is false, so the device driver does not restore texture information. The device driver sees that using_lookup was false, so the device driver does not restore lookup table information. The application begins using texture lookup. The application writes TRUE into the piece of shared memory called "using_lookup". The device driver switches this context off. The device driver looks at shared memory in the com_record and sees that using_texture is false, so it does not save texture information. The device driver sees that using_lookup is true, so the device driver saves lookup information. Then, the device driver switches this context back on. The device driver looks at the com_record in shared memory and sees that using_texture is false, so the device driver does not restore lookup information. The device driver sees that using_lookup is true, so the device driver restores lookup information.

With reference now to **Figure 5,** a flowchart for establishing a context is depicted in accordance with a preferred embodiment of the present invention. The process illustrated in **Figure 5** is an example of a process used by an application, such as application **300, 302,** or **304** in **Figure 3.**

The process begins by creating a record (step **500**). In these examples, the record takes a form of a com_record, such as com_record **400** in **Figure 4.** Of course, the records may take various forms, such as an entry in a table or a record in a database. Predefined functions are then set in the record (step **502).** In the illustrated examples, these functions include texture and lookup functions. In setting up a base context, the device driver receives a call to create the context and sets up the base contexts using default values or functions. For example, a default line color is provided in a base context. When a pairing between a context and a window occurs, additional information is added to the context, such as width, height, and window type. This information is added to the context record associated with a particular process.

Then, graphics operations are then performed by the graphics application or process (step **504)** with the process terminating thereafter. A graphics application or process creates a unique record each time an application requests a context to be created by a device driver. This information exists until the context is destroyed or the process exits.

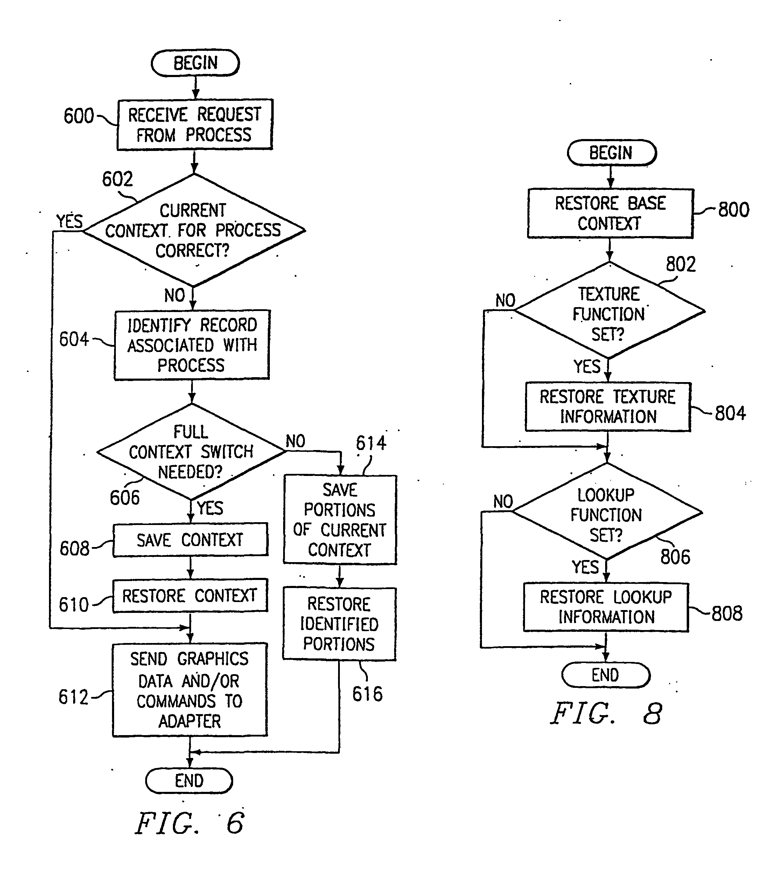

Turning next to **Figure 6,** a flowchart for context switching is depicted in accordance with a preferred embodiment of the present invention. The process is illustrated in **Figure 6** may be implemented in a device driver, such as device driver **306** in **Figure 3.** Of course, this process may be implemented elsewhere depending on the implementation. For example, the process may be implemented in a graphics kernel.

The sequence of events begins by receiving a request from a process to send graphics data to a graphics adapter (step **600).** A determination is made as to whether the current context is correct for the process making the request (step **602).** If the current context is not correct, then a record associated with the process is identified (step **604).** In these examples, the records are com_records located in a pinned buffer.

Next, a determination is made as to whether a full context switch is needed (step 606). If a full context switch is needed, then the current context is saved (step **608),** and the context required for the process is restored or placed into the appropriate location for use (step **610).** The graphics data and/or commands in the request are then sent to the adapter (step 612) with the flow terminating thereafter.

With reference again to step **606,** if a full context switch is not needed, then the current context is saved (step **614).** In step **614,** only the portions of the current context that are to be changed are saved. Then, portions of the context identified for the process are restored (step **616)** with the flow then proceeding to step **612** as described above. In other words, the context information that needs to be changed is retrieved and placed into the current context to modify the current context. Referring back to step **602,** if the current context in the graphics adapter is correct for the process sending the request, the flow then proceeds to step **610 as** described above.

Turning next to **Figure 7,** a flowchart of a process for saving context information is depicted in accordance with a preferred embodiment of the present invention. This process is used during a context switch and being implemented in a device driver such as device driver **306** in **Figure 3.**

The process begins by saving base context information in a record associated with the context for a process (step **700).** A determination is made as to whether a texture has been set in the context (step **702).** If a texture has been set, the texture information is saved in the record (step **704).** Next, a determination is made as to whether a lookup function has been set in the context (step **706).** If a lookup has been set, lookup information is saved (step 708) with the process terminating thereafter. If neither of these functions are set, the process terminates with only the base context information being saved. In this example, only two types of context functions are shown for illustration purposes. Depending on the different types of context that are possible, all of these contexts are saved to the record.

With reference now to Figure 8, a flowchart for restoring context for a process is depicted in accordance with a preferred embodiment of the present invention. The process begins by restoring the base context (step 800). The base context is restored in the graphics adapter using the information in a record associated with the process. The base context includes default settings made by a device driver when the device driver is called to set up a context for a graphics process. A determination is made as to whether a texture function is set in the record (step **802**). If a texture function is set, the texture information for this function is restored in the graphics adapter using the information in the record (step **804**).

Next, a determination is made as to whether a lookup function is set in the record (step 806). If a lookup function is set, the lookup information is restored in the graphics adapter using the record (step 808) with the process terminating thereafter. If in step 802, a texture function is not set, the process proceeds to step 8**06** as described above. If a lookup function is not set in step **806,** the process terminates. Although this figure only illustrates the restoring of context information for two particular functions in addition to the base context information, the mechanism of the present invention will restore context for any functions that are specified in the record.

The steps illustrated in **Figures 7** and 8 are applicable to both saving and restoring full context as well as partial context. If a com_record associated with a selected context indicates that not all of the elements in the context are being used, a partial save occurs. For example, if using_texture and using_lookup are not both set for the example in **Figure 4,** a partial context save occurs. Similarly, with restoring context information, a full context restore operation may not be necessary if some portions of the context are not being used. This mechanism is reflected in steps **702, 706, 802,** and **806** in **Figures 7** and 8**.**

When the amount of space required for a context changes, the size of the context also may be changed to allocate new space.

Thus, the present invention provides a mechanism for use in a graphics environment to allow multiple graphics processes to share the same graphics adapter. This mechanism allows for context switching in which the amount of memory used in a graphics adapter may be reset based on the particular context for a graphics process. Additionally, if a partial context switch is required, then only the information that is needed is restored in the graphics adapter. Performance increases are realized by cases in which partial context changes occur instead of full context changes. Time is saved because less information has to be saved and restored.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of ceded formats that are decoded for actual use in a particular data processing system.

## Claims

1. A data processing method for handling data from a plurality of graphics processes, the method comprising:
responsive to receiving a request from a graphics process to send graphics data to a graphics adapter, determining whether a complete change in a current context, i.e. information or parameters specified at one point in time, in the graphics adapter is required to process the graphics data for the graphics process from the plurality of graphics processes; and
changing a portion of the current context using an associated context in the graphics adapter from a set of contexts stored in a memory in an absence of a requirement for a complete change in the current context, wherein the associated context is associated with the graphics process.

2. The method of claim 1, wherein the context includes texture mapping and color look-up.

3. The method of claim 1 or claim 2, wherein the current context is for a two dimensional graphics environment or a three dimensional graphics environment.

4. The method of claim 1, wherein the memory is a buffer.

5. The method of any one of the preceding claims, wherein the set of contexts are accessible by the set of graphics processes.

6. The method of any one of the preceding claims, further comprising:
saving the current context prior to restoring the associated context.

7. The method of any one of the preceding claims, wherein the current context is associated with another graphics process within the plurality of graphics processes.

8. A data processing method for context management for a plurality of graphic processes, the method comprising:
receiving a request to send graphics data to a graphics adapter from a first graphics process within the plurality of graphics processes;
determining whether a change of less than all of a current context, i.e. information or parameters specified at one point in time, is required for the graphics adapter to process the graphics data from the first graphics process to form an identified amount; and
changing the identified amount of the current context to a another context using a set of contexts stored in a memory, wherein less than all of the current context is changed.

9. The method of claim 8 further comprising:
changing all of the current context if a determination is made that a change of less than all of a current context is insufficient for the graphics adapter to process the graphics data from the first graphics process.

10. The method of claim 9 further comprising:
sending the graphics data to the graphics adapter.

11. The method of claim 9 or claim 10, wherein the step of changing comprises:
replacing the current context or a portion of the current context with context information from the set of contexts to form the another context.

12. The method of any one of claims 8 to 12, wherein a graphics process within the plurality of graphics processes writes context information into a context associated with the graphics process.

13. A data processing system for handling data from a plurality of graphics processes, the system comprising:
determining means, responsive to receiving a request from a graphics process to send graphics data to a graphics adapter, for determining whether a complete change in a current context, i.e. information or parameters specified at one point in time, in the graphics adapter is required to process the graphics data for the graphics process from the plurality of graphics processes; and
changing means for changing a portion of the current context using an associated context in the graphics adapter from a set of contexts stored in a memory in an absence if a requirement for a complete change in the current context, wherein the associated context is associated with the graphics process.

14. A data processing system for context management for a plurality of graphic processes, the data processing system comprising:
receiving means for receiving a request to send graphics data to a graphics adapter from a first graphics process within the plurality of graphics processes;
determining means for determining whether a change of less than all of a current context i.e. information or parameters specified at one point in time, is required for the graphics adapter to process the graphics data from the first graphics process to form an identified amount; and
changing means for changing the identified amount of the current context to a another context using a set of contexts stored in a memory, wherein less than all of the current context is changed.

15. A computer program comprising program code recorded on a machine-readable medium, for use in a data processing system for handling data from a plurality of graphics processes, the program including:
first instructions, responsive to receiving a request from a graphics process to send graphics data to a graphics adapter, for determining whether a complete change in a current context i.e. information or parameters specified at one point in time, in the graphics adapter is required to process the graphics data for the graphics process from the plurality of graphics processes; and
second instructions for changing a portion of the current context using an associated context in the graphics adapter from a set of contexts stored in a memory in an absence if a requirement for a complete change in the current context, wherein the associated context is associated with the graphics process.

16. A computer program comprising program code recorded on a machine-readable recording medium, for use in a data processing system for context management for a plurality of graphic processes, the computer program comprising:
first instructions for receiving a request to send graphics data to a graphics adapter from a first graphics process within the plurality of graphics processes;
second instructions for determining whether a change of less than all of a current context, i.e. information or parameters specified at one point in time, is required for the graphics adapter to process the graphics data from the first graphics process to form an identified amount; and
third instructions for changing the identified amount of the current context to a another context using a set of contexts stored in a memory, wherein less than all of the current context is changed.

## Patentansprüche

1. Datenverarbeitungsverfahren zum Verarbeiten von Daten aus einer Vielzahl von Grafikprozessen, wobei das Verfahren Folgendes umfasst:
als Reaktion auf das Empfangen einer Anforderung von einem Grafikprozess: Senden von Grafikdaten an einen Grafikadapter, Ermitteln, ob zum Verarbeiten der Grafikdaten dieses Grafikprozesses aus der Vielzahl von Grafikprozessen eine vollständige Änderung eines aktuellen Kontexts, d.h. zu einem bestimmten Zeitpunkt festliegender Daten oder Parameter, erforderlich ist; und
beim Fehlen einer Anforderung für eine vollständige Änderung des aktuellen Kontexts: Ändern eines Teils des aktuellen Kontexts im Grafikadapter unter Verwendung eines zugehörigen Kontexts aus einer Gruppe in einem Speicher gespeicherter Kontexte, wobei der zugehörige Kontext dem Grafikprozess zugeordnet ist.

2. Verfahren nach Anspruch 1, bei welchem der Kontext eine Texturtabelle und eine Farbensuchfunktion beinhaltet.

3. Verfahren nach Anspruch 1 oder 2, bei welchem der aktuelle Kontext eine zweidimensionale oder eine dreidimensionale Grafikumgebung betrifft.

4. Verfahren nach Anspruch 1, bei welchem der Speicher ein Pufferspeicher ist.

5. Verfahren nach einem der vorangehenden Ansprüche, bei welchem die Gruppe der Grafikprozesse auf die Gruppe der Kontexte zugreifen kann.

6. Verfahren nach einem der vorangehenden Ansprüche, welches ferner Folgendes umfasst:
Speichern des aktuellen Kontexts vor dem Wiederherstellen des zugeordneten Kontexts.

7. Verfahren nach einem der vorangehenden Ansprüche, bei welchem der aktuelle Kontext einem anderen Grafikprozess aus der Vielzahl von Grafikprozessen zugeordnet ist.

8. Datenverarbeitungsverfahren zur Kontextverwaltung für eine Vielzahl von Grafikprozessen, wobei das Verfahren Folgendes umfasst:
Empfangen einer Anforderung von einem ersten Grafikprozess aus der Vielzahl von Grafikprozessen, Grafikdaten an einen Grafikadapter zu senden;
Ermitteln, ob zum Verarbeiten der Grafikdaten des ersten Grafikprozesses durch den Grafikadapter weniger als ein gesamter aktueller Kontext, d.h. zu einem bestimmten Zeitpunkt festliegender Daten oder Parameter, geändert werden muss, um einen bestimmten Umfang zu ermitteln; und
Ändern des ermittelten Umfangs des aktuellen Kontexts unter Verwendung einer Gruppe in einem Speicher gespeicherter Kontexte in einen anderen Kontext, wobei weniger als der gesamte aktuelle Kontext geändert wird.

9. Verfahren nach Anspruch 8, welches ferner Folgendes umfasst:
Ändern des gesamten aktuellen Kontexts, wenn festgestellt wird, dass zur Verarbeitung der Grafikdaten des ersten Grafikprozesses durch den Grafikadapter eine Änderung lediglich eines Teils des aktuellen Kontexts nicht ausreicht.

10. Verfahren nach Anspruch 9, welches ferner Folgendes umfasst:
Senden der Grafikdaten zum Grafikadapter.

11. Verfahren nach Anspruch 9 oder 10, bei welchem der Änderungsschritt Folgendes umfasst:
Ersetzen des aktuellen Kontexts oder eines Teils des aktuellen Kontext durch Kontextdaten aus der Gruppe von Kontexten, um den geänderten Kontext zu bilden.

12. Verfahren nach einem der Ansprüche 8 bis 12, bei welchem der Grafikprozess aus der Vielzahl von Grafikprozessen Kontextdaten in einen Kontext schreibt, welcher dem Grafikprozess zugeordnet ist.

13. Datenverarbeitungssystem zum Verarbeiten von Daten aus einer Vielzahl von Grafikprozessen, wobei das System Folgendes umfasst:
ein Ermittlungsmittel, welches als Reaktion auf das Empfangen einer Anforderung von einem Grafikprozess, Grafikdaten an einen Grafikadapter zu senden, ermittelt, ob zur Verarbeitung der Grafikdaten des Grafikprozesses aus der Vielzahl von Grafikprozessen durch den Grafikadapter ein aktueller Kontext, d.h. zu einem bestimmten Zeitpunkt festliegende Daten oder Parameter, vollständig geändert werden muss; und
ein Änderungsmittel zum Ändern eines Teils des aktuellen Kontexts im Grafikadapter unter Verwendung eines zugeordneten Kontexts aus einer Gruppe in einem Speicher gespeicherter Kontexte beim Fehlen einer Anforderung für eine vollständige Änderung des aktuellen Kontexts, wobei der zugehörige Kontext dem Grafikprozess zugeordnet ist.

14. Datenverarbeitungssystem zur Kontextverwaltung für eine Vielzahl von Grafikprozessen, wobei das Datenverarbeitungssystem Folgendes umfasst:
ein Empfangsmittel zum Empfangen einer Anforderung zum Senden von Grafikdaten von einem ersten Grafikprozess aus der Vielzahl von Grafikprozessen an einen Grafikadapter;
ein Ermittlungsmittel zum Ermitteln, ob zum Verarbeiten der Grafikdaten vom ersten Grafikprozess durch den Grafikadapter weniger als ein gesamter aktueller Kontext, d.h. zu einem bestimmten Zeitpunkt festliegender Daten oder Parameter, geändert werden muss, um einen bestimmten Umfang zu ermitteln; und
ein Änderungsmittel zum Ändern des ermittelten Umfangs des aktuellen Kontexts unter Verwendung einer Gruppe in einem Speicher gespeicherter Kontexte in einen anderen Kontext, wobei weniger als der gesamte aktuelle Kontext geändert wird.

15. Computerprogramm, welches einen auf einem maschinenlesbaren Medium gespeicherten Programmcode umfasst, zur Verwendung in einem Datenverarbeitungssystem zum Verarbeiten von Daten von einer Vielzahl von Grafikprozessen, wobei das Programm Folgendes beinhaltet:
erste Anweisungen zum Ermitteln als Reaktion auf das Empfangen einer Anforderung von einem Grafikprozess, Grafikdaten an einen Grafikadapter zu senden, ob zum Verarbeiten der Grafikdaten des Grafikprozesses aus der Vielzahl von Grafikprozessen ein gesamter aktueller Kontext, d.h. zu einem bestimmten Zeitpunkt festgelegter Daten oder Parameter, geändert werden muss; und
zweite Anweisungen zum Ändern eines Teils des aktuellen Kontexts im Grafikadapter unter Verwendung eines zugehörigen Kontexts aus einer Gruppe in einem Speicher gespeicherter Kontexte beim Fehlen einer Anforderung für eine vollständige Änderung des aktuellen Kontexts, wobei der zugehörige Kontext dem Grafikprozess zugeordnet ist.

16. Computerprogramm, welches einen auf einem maschinenlesbaren Medium gespeicherten Programmcode umfasst, zur Verwendung in einem Datenverarbeitungssystem zur Kontextverwaltung für eine Vielzahl von Grafikprozessen, wobei das Computerprogramm Folgendes umfasst:
erste Anweisungen zum Empfangen einer Anforderung von einem ersten Grafikprozess aus der Vielzahl von Grafikprozessen, Grafikdaten an einen Grafikadapter zu senden;
zweite Anweisungen zum Ermitteln, ob zum Verarbeiten der Grafikdaten des ersten Grafikprozesses durch den Grafikadapter ein gesamter aktueller Kontext, d.h. zu einem bestimmten Zeitpunkt festgelegte Daten oder Parameter, geändert werden muss, um einen bestimmten Umfang zu ermitteln; und
dritte Anweisungen zum Ändern des ermittelten Umfangs des aktuellen Kontexts in einen geänderten Kontext unter Verwendung einer Gruppe in einem Speicher gespeicherter Kontexte, wobei weniger als der gesamte aktuelle Kontext geändert wird.

## Revendications

1. Procédé de traitement de données destiné à manipuler des données provenant d'une pluralité de traitements graphiques, le procédé comprenant :
en réponse à la réception d'une demande provenant d'un traitement graphique pour envoyer des données graphiques à un adaptateur graphique, déterminer si un changement complet d'un contexte en cours, c'est-à-dire des informations ou des paramètres spécifiés à un instant donné dans l'adaptateur graphique, est nécessaire pour traiter les données graphiques pour le traitement graphique parmi la pluralité de traitements graphiques, et
modifier une partie du contexte en cours en utilisant un contexte associé dans l'adaptateur graphique à partir d'un ensemble de contextes mémorisés dans une mémoire en l'absence d'un besoin d'un changement complet du contexte en cours, où le contexte associé est associé au traitement graphique.

2. Procédé selon la revendication 1, dans lequel le contexte comprend le mappage de texture et la recherche de couleur.

3. Procédé selon la revendication 1 ou la revendication 2, dans lequel le contexte en cours est destiné à un environnement graphique à deux dimensions ou à un environnement graphique à trois dimensions.

4. Procédé selon la revendication 1, dans lequel la mémoire est une mémoire tampon.

5. Procédé selon l'une quelconque des revendications précédentes, dans lequel l'ensemble des contextes est accessible à l'ensemble des traitements graphiques.

6. Procédé selon l'une quelconque des revendications précédentes, comprenant en outre :
la sauvegarde du contexte en cours avant de rétablir le contexte associé.

7. Procédé selon l'une quelconque des revendications précédentes, dans lequel le contexte en cours est associé à un autre traitement graphique appartenant à la pluralité de traitements graphiques.

8. Procédé de traitement de données destiné à la gestion du contexte pour une pluralité de traitements graphiques, le procédé comprenant :
la réception d'une demande pour envoyer des données graphiques à un adaptateur graphique depuis un premier traitement graphique parmi la pluralité de traitements graphiques,
la détermination du fait qu'un changement de moins que la totalité du contexte en cours, c'est-à-dire des informations et des paramètres spécifiés à un instant donné, est nécessaire pour que l'adaptateur graphique traite les données graphiques provenant du premier traitement graphique afin de former une quantité identifiée, et
la modification de la quantité identifiée du contexte en cours en un autre contexte en utilisant un ensemble de contextes mémorisés dans une mémoire, où moins que la totalité du contexte en cours est modifiée.

9. Procédé selon la revendication 8, comprenant en outre :
le changement de la totalité du contexte en cours s'il est déterminé qu'un changement de moins que la totalité du contexte en cours est insuffisant pour que l'adaptateur graphique traite les données graphiques provenant du premier traitement graphique.

10. Procédé selon la revendication 9, comprenant en outre :
l'envoi des données graphiques à l'adaptateur graphique.

11. Procédé selon la revendication 9 ou la revendication 10, dans lequel l'étape de changement comprend :
le remplacement du contexte en cours ou d'une partie du contexte en cours par des informations de contexte provenant de l'ensemble de contextes afin de former l'autre contexte.

12. Procédé selon l'une quelconque des revendications 8 à 12, dans lequel un traitement graphique au sein de la pluralité des traitements graphiques écrit des informations de contexte dans un contexte associé au traitement graphique.

13. Système de traitement de données destiné à manipuler des données provenant d'une pluralité de traitements graphiques, le système comprenant :
un moyen de détermination, répondant à la réception d'une demande provenant d'un traitement graphique pour envoyer des données graphiques à un adaptateur graphique, afin de déterminer si une modification complète d'un contexte en cours, c'est-à-dire d'informations ou de paramètres spécifiques à un moment donné dans l'adaptateur graphique est nécessaire pour traiter les données graphiques pour le traitement graphique parmi la pluralité de traitements graphiques, et
un moyen de modification destiné à modifier une partie du contexte en cours en utilisant un contexte associé dans l'adaptateur graphique parmi un ensemble de contextes mémorisés dans une mémoire en l'absence d'un besoin d'une modification complète du contexte en cours, où le contexte associé est associé au traitement graphique.

14. Système de traitement de données destiné à la gestion de contexte pour une pluralité de traitements graphiques, le système de traitement de données comprenant :
un moyen de réception destiné à recevoir une demande pour envoyer des données graphiques à un adaptateur graphique provenant d'un premier traitement graphique parmi la pluralité de traitements graphiques,
un moyen de détermination destiné à déterminer si une modification de moins que la totalité d'un contexte en cours, c'est-à-dire d'informations ou de paramètres spécifiés à un moment donné, est nécessaire pour que l'adaptateur graphique traite les données graphiques provenant du premier traitement graphique afin de former une quantité identifiée, et
un moyen de modification destiné à modifier la quantité identifiée du contexte en cours en un autre contexte en utilisant un ensemble de contextes mémorisés dans une mémoire, où moins que la totalité du contexte en cours est modifiée.

15. Programme informatique comprenant un code de programme enregistré sur un support pouvant être lu par une machine, à utiliser dans un système de traitement de données destiné à manipuler les données provenant d'une pluralité de traitements graphiques, le programme comprenant :
des premières instructions, en réponse à la réception d'une demande provenant d'un traitement graphique pour envoyer des données graphiques à un adaptateur graphique, afin de déterminer si une modification complète d'un contexte en cours, c'est-à-dire d'informations ou de paramètres spécifiés à un moment donné, dans l'adaptateur graphique est nécessaire pour traiter les données graphiques pour le traitement graphique provenant de la pluralité de traitements graphiques, et
des secondes instructions destinées à modifier une partie du contexte en cours en utilisant un contexte associé dans l'adaptateur graphique à partir d'un ensemble de contextes mémorisés dans une mémoire en l'absence d'un besoin d'une modification complète du contexte en cours, où le contexte associé est associé au traitement graphique.

16. Programme informatique comprenant un code de programme enregistré sur un support d'enregistrement pouvant être lu par une machine, à utiliser dans un système de traitement de données destiné à la gestion du contexte pour une pluralité de traitements graphiques, le programme informatique comprenant :
des premières instructions en vue de la réception d'une demande pour envoyer des données graphiques à un adaptateur graphique à partir d'un premier traitement graphique parmi la pluralité de traitements graphiques,
des secondes instructions en vue de déterminer si une modification de moins que la totalité d'un contexte en cours, c'est-à-dire d'informations ou de paramètres spécifiés à un instant donné, est nécessaire pour que l'adaptateur graphique traite les données graphiques provenant du premier traitement graphique pour former une quantité identifiée, et
des troisièmes instructions destinées à modifier la quantité identifiée du contexte en cours en un autre contexte en utilisant un ensemble de contextes mémorisés dans une mémoire, où moins que la totalité du contexte en cours est modifiée.
